# EUROPÄISCHE PATENTSCHRIFT

(11) **EP 2 516 965 B1**
(45) Veröffentlichungstag und Bekanntmachung des Hinweises auf die Patenterteilung: **06.07.2016**
(21) Anmeldenummer: 10800694.1
(22) Anmeldetag: 07.12.2010
(51) Int. Cl.: G01C 21/36

(54) **NAVIGATIONSSYSTEM, INSBESONDERE FÜR EIN KRAFTFAHRZEUG**
NAVIGATION SYSTEM, IN PARTICULAR FOR A MOTOR VEHICLE
SYSTÈME DE NAVIGATION, EN PARTICULIER POUR UN VÉHICULE AUTOMOBILE

(30) Priorität: 24.12.2009 DE 102009060365
(43) Veröffentlichungstag der Anmeldung: 31.10.2012
(73) Patentinhaber: Volkswagen Aktiengesellschaft, 38440 Wolfsburg (DE)
(72) Erfinder: NEUGEBAUER, Moritz, 10439 Berlin (DE); SEITZ, Gordon, 38468 Ehra-Lessien (DE); SCHULZ, Stefan, 10965 Berlin (DE); GAUS, Imke, 10589 Berlin (DE); MEYER, Oliver, 85051 Ingolstadt (DE)
(86) Internationale Anmeldenummer: PCT/EP2010/007405
(87) Internationale Veröffentlichungsnummer: WO 2011/076336

(56) Entgegenhaltungen:
- EP-A1- 2 241 983
- DE-A1- 19 929 425
- DE-A1-102005 058 145
- DE-B3-102004 010 406

## Beschreibung

Die Erfindung betrifft ein Navigationssystem, insbesondere für ein Kraftfahrzeug, zur Bestimmung einer Route zu einem Zielpunkt, wobei das Navigationssystem eine Eingabevorrichtung zur Eingabe des Zielpunktes und ein Display zu Darstellung veränderlicher Informationen umfasst. Die Erfindung betrifft zudem ein Verfahren zum Betrieb eines derartigen Navigationssystems.

Die DE 103 61 479 A1 offenbart eine Vorrichtung zur Eingabe alphanumerischer Zeichen mit einer Anzeigeeinheit, auf der Hauptzeichen und Sonderzeichen darstellbar sind, wobei mittels eines Eingabemittels ein dargestelltes alphanumerisches Zeichen zur Eingabe in ein Infotainment-System auswählbar ist, wobei die Sonderzeichen in mindestens zwei Gruppen eingeteilt sind, und wobei die gruppenweise zusammengefassten Sonderzeichen jeweils einem Hauptzeichen zugeordnet sind. Auf diese Weise sind Haupt- und Sonderzeichen eingebbar, wobei die Anzeigevorrichtung ein Eingabe-Anzeigefeld aufweist, in dem die ausgewählten alphanumerischen Zeichen dargestellt werden.

Die DE 103 13 222 A1 offenbart ein Verfahren zur Eingabe von Ortsnamen in ein Navigationssystem in einem Fahrzeug, wobei ein Ortsname eingegeben wird, wobei ein eingegebener Ortsname mit in einem Speicher abgelegten Ortsnamen verglichen wird, und wobei für den Fall, dass der eingegebene Ortsname mindestens zwei verschiedenen Orten zugeordnet wird, mindestens eine Karte zur Kennzeichnung der Orte angezeigt wird.

Die EP 1 624 288 A1 offenbart ein Navigationssystem für ein Fahrzeug, das Routenplanungs- und Routenführungsinformationen ausgibt, wobei ein Sprachbediensystem vorgesehen ist, mittels dessen die Ausgabe von Sekundärinformationen veranlasst werden kann.

Die DE 199 29 425 A1 offenbart ein Verfahren zur Auswahl eines Navigationsziels in einem Navigationsgerät, wobei eine Liste von Navigationszielen erzeugt wird, die in einem durch einen Benutzer gewählten Kartenausschnitt liegen, wobei ein Navigationsziel aus der Liste auswählbar ist.

Die DE 10 2005 058 145 A1 offenbart ein Verfahren zur optischen Ausgabe einer Vielzahl von auswählbaren Zielbegriffen bei der Eingabe eines Fahrziels in ein Navigationssystem. Dabei wird zumindest ein bevorzugter Zielbegriff nach bestimmt und bei der Ausgabe optisch gegenüber anderen Zielbegriffen aus einer Vielzahl von auswählbaren Zielbegriffen hervorgehoben.

Die EP 2 241 983 A1 betrifft ein Verfahren zur Suche von geographischen Objekten in einer Datenbasis, wobei während der Eingabe eines gesuchten Objekts ein geographisches Gebiet angezeigt wird, das die bei der Suche gefundenen Objekte umfasst.

Es ist Aufgabe der Erfindung, die Eingabe von Zielpunkten bei Navigationssystemen insbesondere bei Navigationssystemen für Kraftfahrzeuge zu beschleunigen, wobei insbesondere Fehleingaben vermindert bzw. vermieden werden sollen.

Vorgenannte Aufgabe wird durch ein Navigationssystem gemäß Anspruch 1 gelöst.

Eine Kartendarstellung im Sinne der Erfindung kann eine Karte, ein Satellitenbild oder eine 3D-Grafik sein. Die Karte, das Satellitenbild bzw. die 3D-Grafik kann dabei z. B. in Draufsicht, in Vogelperspektive oder in first-person-view dargestellt werden. Eine Kartendarstellung im Sinne der Erfindung umfasst insbesondere eine für das Fahrzeug vorgesehene Infrastruktur, wie etwa Straßen.

Eine Route im Sinne der Erfindung geht insbesondere vom Standpunkt des Navigationssystems oder eines Kraftfahrzeuges mit einem derartigen Navigationssystem aus. Eine Route kann jedoch auch insbesondere von einem eingegebenen Ausgangspunkt ausgehen. Dabei kann die Eingabe eines Ausgangspunktes in entsprechender Weise, wie die beschriebene bzw. beanspruchte Eingabe eines Zielortes erfolgen.

Ein Display im Sinne der Erfindung ist insbesondere ein Matrixdisplay. Ein Display im Sinne der Erfindung kann zum Beispiel ein TFT sein.

Während der Eingabe eines Zielpunktes bedeutet im Sinne der Erfindung insbesondere vor Abschluss der Eingabe des Zielpunktes. Während der Eingabe eines Zielpunktes bedeutet im Sinne der Erfindung insbesondere vor Eingabe des letzten Buchstabens eines Zielpunktes. Während der Eingabe eines Zielpunktes bedeutet im Sinne der Erfindung insbesondere die Eingabe von 1 bis n-1 Buchstaben eines n Buchstaben umfassenden Namens oder Teilnamens eines Zielpunktes.

Eine Eingabevorrichtung zur Eingabe alphanumerischer Zeichen bzw. zur alphanumerischen Eingabe eines Zielpunktes oder Ausgangspunktes, kann zum Beispiel ein Drehknopf, ein Druckknopf, ein kombinierter Dreh- und Druckknopf, ein über ein Display angeordneter Touchscreen oder ein Spracheingabesystem sein. Eine alphanumerische Eingabe im Sinne der Erfindung ist insbesondere eine buchstabengestützte bzw. eine buchstaben- und/oder zifferngestützte Eingabe. Buchstaben im Sinne der Erfindung können insbesondere Ziffern und/oder Sonderzeichen umfassen.

Gemäß der Erfindung ist bei Eingabe eines weiteren Buchstabens eine veränderte Auswahl möglicher Zielpunkte in einem veränderten Karten ausschnitt anzeigbar. In vorteilhafter Ausgestaltung der Erfindung umfasst das Navigationssystem ein Bedienelement zur Auswahl eines Zielpunktes in der Kartendarstellung. Ein Bedienelement im Sinne der Erfindung kann zum Beispiel ein Drehknopf, ein Druckknopf, ein kombinierter Dreh- und Druckknopf oder ein über ein Display angeordneter Touchscreen sein. Ein Bedienelement im Sinne der Erfindung kann insbesondere auch die vorgenannte Eingabevorrichtung sein.

Vorgenannte Aufgabe wird zudem durch ein Kraftfahrzeug mit einem Navigationssystem bzw. Navigationsmodul zur Bestimmung einer Route zu einem Zielpunkt gelöst, wobei das Kraftfahrzeug eine Eingabevorrichtung zur alphanumerischen Eingabe des Zielpunktes und ein Display zu Darstellung veränderlicher Informationen umfasst, und wobei das Kraftfahrzeug eine Recheneinrichtung zur Anzeige möglicher Zielpunkte in einer Kartendarstellung mittels des Displays während der Eingabe des Zielpunktes aufweist.

In vorteilhafter Ausgestaltung der Erfindung umfasst das Kraftfahrzeug ein Bedienelement zur Auswahl eines Zielpunktes in der Kartendarstellung.

Vorgenannte Aufgabe wird - insbesondere in Verbindung mit vorgenannten Merkmalen - zudem durch ein Verfahren gemäß Anspruch 3 gelöst.

In vorteilhafter Ausgestaltung der Erfindung umfasst die Auswahl möglicher Zielpunkte nicht mehr als zehn Zielpunkte. Die Auswahl umfasst gemäß der Erfindung die wahrscheinlichsten Zielpunkte. In eine derartige Wahrscheinlichkeitsabschätzung geht die Nähe zum Ausgangspunkt bzw. dem Standort des Navigationssystems bzw. eines entsprechenden Kraftfahrzeuges mit einem derartigen Navigationssystem und die Größe des Zielortes ein. So kann zum. Beispiel eine Wahrscheinlichkeitskennzahl die Größe oder Einwohnerzahl eines Zielortes dividiert durch den Abstand vom Standort des Navigationssystems bzw. dem Standort eines Kraftfahrzeuges mit einem derartigen Navigationssystem sein.

Gemäß der Erfindung wird eine veränderte Auswahl möglicher Zielpunkte in einem veränderten Karten ausschnitt angezeigt, wenn ein weiterer Buchstabe eingegeben wird. In vorteilhafter Ausgestaltung der Erfindung wird eine engere Auswahl der Auswahl möglicher Zielpunkte in der Kartendarstellung hervorgehoben dargestellt. Ein derartiges Hervorheben kann zum Beispiel dadurch erfolgen, dass der Name des entsprechenden Zielortes dargestellt wird. Ein derartiges Hervorheben kann jedoch auch dadurch erfolgen, dass der Name des entsprechenden Zielortes farblich hervorgehoben, vergrößert und/oder animiert (zum Beispiel Blinken) dargestellt wird. In weiterhin vorteilhafter Ausgestaltung der Erfindung umfasst die engere Auswahl die wahrscheinlichsten Zielpunkte.

In weiterhin vorteilhafter Ausgestaltung der Erfindung wird der wahrscheinlichste Zielpunkt in der Kartendarstellung besonders hervorgehoben dargestellt. Ein derartiges besonderes Hervorheben kann zum Beispiel dadurch erfolgen, dass der Name des entsprechenden Zielortes dargestellt wird. Ein derartiges besonderes Hervorheben kann jedoch auch dadurch erfolgen, dass der Name des entsprechenden Zielortes farblich hervorgehoben, vergrößert und/oder animiert (zum Beispiel Blinken) dargestellt wird. Es kann zum Beispiel auch vorgesehen sein, dass ein Hervorheben durch die Darstellung des Namens des Zielortes erfolgt, wohingegen das besondere Hervorheben des wahrscheinlichsten Zielpunktes durch vergrößerte und/oder farblich abgesetzte und/oder gerahmte Darstellung des Namens des Zielortes erfolgt. In weiterhin vorteilhafter Ausgestaltung der Erfindung wird ein Zielpunkt der Auswahl in der Kartendarstellung dargestellter Zielpunkte akustisch ausgewählt. Es kann jedoch auch vorgesehen sein, dass ein Zielpunkt der Auswahl in der Kartendarstellung dargestellter Zielpunkte mittels der vorgenannten Eingabevorrichtung, mittels des vorgenannten Bedienelementes und/oder einer weiteren Bedienvorrichtung ausgewählt wird.

In vorteilhafter Ausgestaltung der Erfindung kann ein Zielpunkt der Auswahl in der

Kastendarstellung dargestellter Zielpunkte akustisch ausgewählt werden.

In weiterhin vorteilhafter Ausgestaltung der Erfindung wird eine Aufforderung zur erneuten Auswahl ausgegeben, wenn die akustische Eingabe keinem Zielpunkt zugeordnet werden konnte.

Kraftfahrzeug im Sinne der Erfindung ist insbesondere ein individuell im Straßenverkehr benutzbares Landfahrzeug. Kraftfahrzeuge im Sinne der Erfindung sind insbesondere nicht auf Landfahrzeuge mit Verbrennungsmotor beschränkt.

Weitere Vorteile und Einzelheiten ergeben sich aus der nachfolgenden Beschreibung von Ausführungsbeispielen. Dabei zeigen:
- Fig. 1: ein Ausführungsbeispiel eines Kraftfahrzeuges in einer ausschnittsweisen Innenansicht,
- Fig. 2: das Kraftfahrzeug gemäß Fig. 1 in einer beispielhaften funktionalen Prinzipdarstellung,
- Fig. 3: ein Ausführungsbeispiel eines Verfahrens zum Betrieb eines Kraftfahrzeuges gemäß Fig. 1 bzw. eines Navigationssystems eines Kraftfahrzeuges gemäß Fig. 1,
- Fig. 4: eine Eingabemaske zur alphanumerischen Eingabe von Ortsnamen,
- Fig. 5: die Eingabemaske gemäß Fig. 4 in einem weiteren Zustand,
- Fig. 6: ein alternatives Ausführungsbeispiel einer Anzeige möglicher Zielpunkte bzw. eine Auswahl möglicher Zielpunkte in einer Kartendarstellung und
- Fig. 7: ein Ausführungsbeispiel einer Aufforderung zur erneuten Auswahl eines angezeigten Zielpunktes.

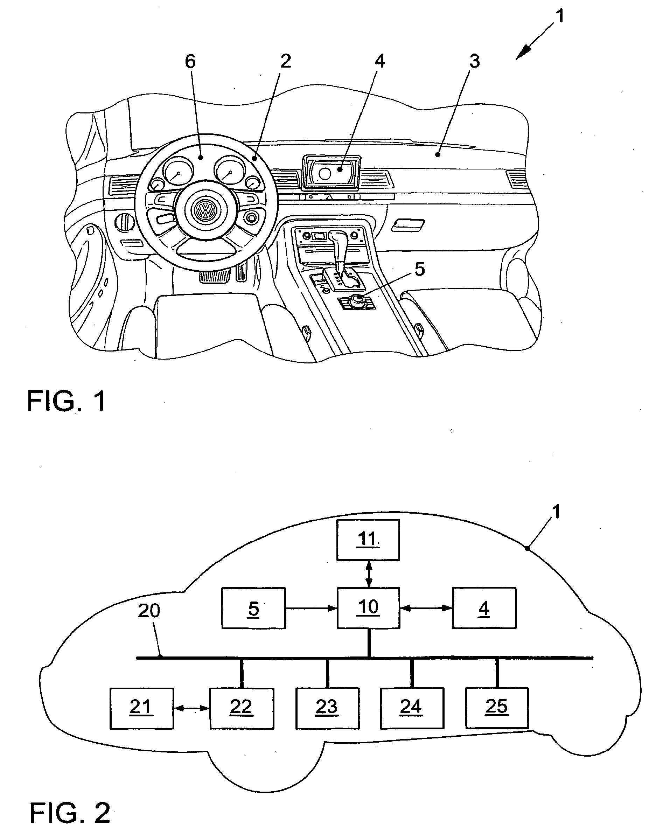

Fig. 1 zeigt ein Ausführungsbeispiel eines Kraftfahrzeuges 1 in einer ausschnittsweisen Innenansicht, das in Fig. 2 in einer funktionalen Prinzipdarstellung dargestellt ist. Das Kraftfahrzeug 1 umfasst ein im Bereich des Armaturenbretts 3 des Kraftfahrzeuges 1 angeordnetes Display 4 zur Bedienung des Kraftfahrzeuges 1. Dazu kann vorgesehen sein, dass über dem Display 4 ein Touchscreen angeordnet ist. Zusätzlich oder alternativ kann das Kraftfahrzeug 1 mittels eines mit Bezugszeichen 5 bezeichneten Bedienelementes im Zusammenwirken mit dem Display 4 bedient werden. Darüber hinaus umfasst das Kraftfahrzeug 1 ein vor dem Lenkrad 2 angeordnetes Kombiinstrument 6. Die folgenden Ausführungen in Bezug auf das Display 4 können alternativ oder zusätzlich auch für ein in dem Kombiinstrument 6 integriertes Display gelten.

Zur Bedienung des Kraftfahrzeuges 1 bzw. einzelner Funktionen des Kraftfahrzeuges 1 mittels des Displays 4 bzw. einem darüber angeordneten Touchscreen bzw. dem Bedienelement 5 ist eine Anzeige- und Bediensteuerung 10 vorgesehen, über die auch ein Sprachein- und -ausgabesystem 11 ansteuerbar bzw. auslesbar ist. Die Anzeige- und Bediensteuerung 10 ist über ein Bussystem 20 mit einer Telefonschnittstelle 22 zur Bedienung eines Mobiltelefons 21, mit einem Navigationsmodul 23, mit einer Klimaautomatik 24 sowie mit einem Infotainment-System 25 verbunden, die mittels der Anzeige- und Bediensteuerung 10 bzw. dem Sprachein- und -ausgabesystem 11, dem Bedienelement 5 und/oder dem Display 4 bedienbar sind. Das Navigationsmodul 23 kann auch als Navigationssystem bezeichnet werden. Das Navigationsmodul 23 in Verbindung mit der Anzeige- und Bediensteuerung 10, dem Display 4 und/oder dem Bedienelement 5 sowie optional in Verbindung mit dem Sprachein- und -ausgabesystem 11 bilden jedoch ein Ausführungsbeispiel für ein Navigationssystem im Sinne der Ansprüche.

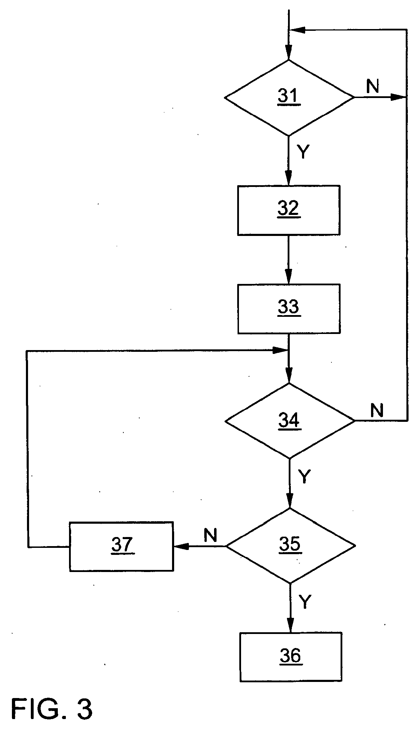

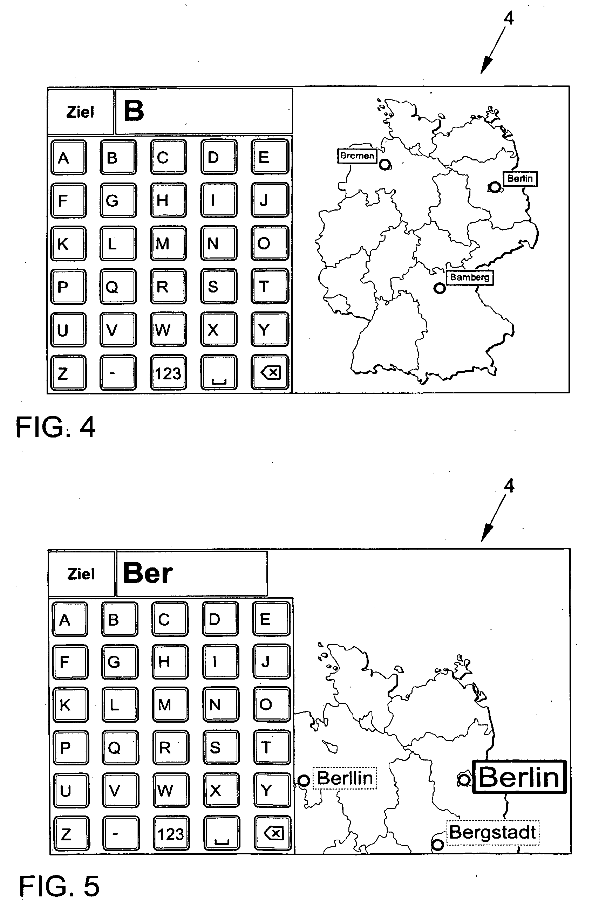

Fig. 3 zeigt ein Ausführungsbeispiel für ein Verfahren zur Bedienung des Kraftfahrzeuges 1 bzw. eines Navigationssystems im Sinne der Ansprüche. Dabei erfolgt zunächst eine Abfrage 31, ob eine Eingabe eines alphanumerischen Zeichens erfolgt ist. Zur Eingabe eines alphanumerischen Zeichens kann zum Beispiel - wie in Fig. 4 und Fig. 5 dargestellt - mittels des Displays 4 eine alphanumerische Tastatur angezeigt werden, wobei die alphanumerische Tastatur mittels eines über dem Display 4 angeordneten Touchscreens und/oder mittels des Bedienelementes 5 bedienbar ist. Ist keine Eingabe erfolgt, so wird die Abfrage 31 wiederholt. Ist dagegen eine Eingabe erfolgt, so werden in einem Schritt 32 die aufgrund dieser Eingabe möglichen Zielpunkte bestimmt und in einem Schritt 33 - wie beispielhaft in Fig. 4 dargestellt - eine Auswahl möglicher Zielpunkte aufgrund der Eingabe in einer angepassten Kartendarstellung dargestellt. Im in Fig. 4 dargestellten Ausführungsbeispiel werden aufgrund der Eingabe des Buchstaben "B" die Städte "Bremen", "Berlin" und "Bamberg" als mögliche Zielpunkte in der Kartendarstellung angezeigt. In dem verwendeten Beispiel ist vorgesehen, dass die Auswahl auf die wahrscheinlichsten drei Zielpunkte beschränkt wird. Die Auswahl kann jedoch auch auf die wahrscheinlichsten zehn Zielpunkte beschränkt werden. Darüber hinaus ist vorgesehen, dass die Kartendarstellung den ausgewählten Zielpunkten angepasst dargestellt wird. Die angezeigten Zielpunkte ("Bremen", "Bertin" und "Bamberg") können durch Berühren eines über dem Display 4 angeordneten Touchscreens und/oder mittels des Bedienelementes 5 ausgewählt werden. Es kann jedoch insbesondere vorgesehen sein, dass die Auswahl eines Zielpunktes durch Nennung dessen Namens akustisch erfolgt.

Dem Schritt 33 folgt eine Abfrage 34, ob entsprechend diesen Beispielen ein Zielpunkt ausgewählt worden ist. Ist kein Zielpunkt ausgewählt worden bzw. kein derartiger Versuch erkannt worden, so folgt der Abfrage 34 wiederum die Abfrage 31. Fig. 5 zeigt einen Zustand, in dem der die Schleife umfassend die Abfrage 31, den Schritt 32, den Schritt 33 und die Abfrage 34 bereits dreimal worden durchlaufen ist und zu der Eingabe (und Anzeige) "BER" geführt hat. Als die wahrscheinlichsten drei Zielorte hat die Anzeige- und Bediensteuerung 10 oder das Navigationsmodul 23 die Orte "Berllin". "Berlin" und "Bergstadt" ausgewählt. Im Schritt 33 wird zudem die Kartendarstellung - wie in Fig. 5 dargestellt - entsprechend angepasst, sodass nur ein Kartenausschnitt dargestellt wird, der gerade genügend Raum zur Orientierung auf der Kartendarstellung lässt.

Zudem ist vorgesehen, dass der als wahrscheinlichster Zielort bewertete Zielort hervorgehoben dargestellt wird, wie dies in Fig. 5 beispielhaft anhand des Zielortes "Berlin" mittels eines Rahmens erfolgt ist.

Wird eine Auswahl eines angezeigten Zielpunktes erkannt, so folgt der Abfrage 34 eine Abfrage 35, ob die Auswahl gültig ist. Eine derartige Abfrage 35 ist insbesondere dann vorgesehen, wenn die Auswahl eines angezeigten bzw. dargestellten Zielpunktes akustisch erfolgt. Ist nicht identifizierbar, welcher der in der Kartendarstellung dargestellten Zielpunkte ausgewählt werden soll, so folgt der Abfrage 35 ein Schritt 37 mit einer Aufforderung, die Eingabe zu wiederholen. Dies kann grafisch und/oder akustisch erfolgen. Ist die Auswahl des Zielpunktes in der Kartendarstellung dagegen gültig, so folgt der Abfrage 35 ein Schritt 36, in dem der ausgewählte Zielpunkt als Zielpunkt einer Route verwendet und eine entsprechende Route berechnet wird.

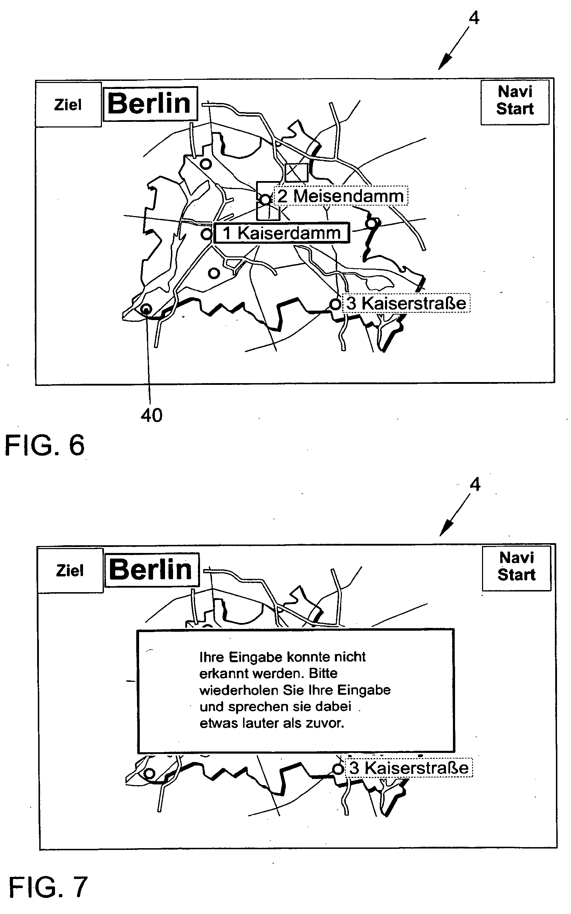

Fig. 6 zeigt ein alternatives Ausführungsbeispiel einer Darstellung möglicher Zielpunkte in einer Kartendarstellung. Dabei sind zum Beispiel mehrere Zielpunkte in Form von Straßen in der Stadt Berlin dargestellt, wobei der wahrscheinliche Zielpunkt, in dem vorliegenden Ausführungsbeispiel "Kaiserdamm", besonders hervorgehoben wird. Weitere sehr wahrscheinliche Zielpunkte werden durch ihre Namen, wie zum Beispiel "Meisendamm" und "Kaiserstraße" hervorgehoben. Weniger wahrscheinliche Zielpunkte werden lediglich durch Markierungen (z. B. Kreise) bezeichnet, wie sie in dem Ausführungsbeispiel gemäß Fig. 6 beispielhaft mit Bezugszeichen 40 bezeichnet ist.

Die in Fig. 6 beispielhaft gezeigte Darstellungsform kommt besonders vorteilhaft auch im Zusammenhang mit akustischen Eingaben für mögliche Zielorte infrage, wobei die Kartendarstellung gemäß Fig. 6 zum Beispiel als Reaktion auf die Spracheingabe "Berlin Kaiserdamm" oder "Kaiserdamm Berlin" angezeigt wird. Die in der Kartendarstellung gemäß Fig. 6 dargestellten möglichen Zielpunkte können zum Beispiel mittels eines über dem Display 4 angeordneten Touchscreens oder dem Bedienelement 5 ausgewählt werden. Ist zum Beispiel ein über dem Display 4 angeordneter Touchscreen vorgesehen, so kann eine Auswahl durch Berühren des Touchscreens im Bereich des angezeigten Namens bzw. des zugeordneten Punktes erfolgen.

Die möglichen Zielorte, die lediglich als Markierungen, nicht jedoch durch eine Namenskennzeichnung dargestellt werden, können mittels des Bedienelementes 5 und/oder mittels des über dem Display 4 angeordneten Touchscreens angewählt werden. Bei ihrer Anwahl wird der zugehörige Name angezeigt, der jedoch wieder verschwindet, wenn eine andere Markierung angewählt oder ausgewählt wird. Darüber hinaus kann vorgesehen sein, dass mögliche Zielpunkte, die nicht in der Kartendarstellung angezeigt werden, durch Nutzerinteraktion zusätzlich aufgerufen und damit dargestellt werden. Bei sprachlicher Eingabe kann dieses zum Beispiel durch direktes Nennen einer sichtbaren oder unsichtbaren Alternative erfolgen.

Erfolgt zum Beispiel die Auswahl eines Zielortes durch eine akustische Nennung, so wird dieser Zielpunkt als Zielpunkt einer Route ausgewählt und eine entsprechende Route berechnet (vgl. Schritt 36). Kann die akustische Auswahl jedoch nicht eindeutig identifiziert werden, so erfolgt, wie beispielhaft in Fig. 7 dargestellt, eine entsprechende Fehlermeldung bzw. Aufforderung zur wiederholten Auswahl, die ein Ausführungsbeispiel für Schritt 37 darstellt. Darüber hinaus oder alternativ kann eine entsprechende akustische Eingabeaufforderung erfolgen.

## Patentansprüche

1. Navigationssystem, insbesondere für ein Kraftfahrzeug (1), zur Bestimmung einer Route zu einem Zielpunkt, wobei das Navigationssystem eine Eingabevorrichtung (5) zur alphanumerischen Eingabe des Zielpunktes und ein Display (4) zur Darstellung veränderlicher Informationen umfasst, wobei das Navigationssystem eine Recheneinrichtung (10) zur Anzeige möglicher Zielpunkte in einer Kartendarstellung mittels des Displays (4) während der Eingabe des Zielpunktes aufweist, **dadurch gekennzeichnet, dass** die Recheneinrichtung (10) zur Anzeige einer veränderten Auswahl möglicher Zielpunkte in einem veränderten Kartenausschnitt bei Eingabe eines weiteren Buchstabens ausgebildet ist, wobei die Auswahl die wahrscheinlichsten Zielpunkte umfasst, und wobei in eine Abschätzung der Wahrscheinlichkeit die Nähe zum Standort des Navigationssystems und die Größe des Zielortes eingehen.

2. Navigationssystem nach Anspruch 1, 2 oder 3, **dadurch gekennzeichnet, dass** das Navigationssystem ein Bedienelement (5) zur Auswahl eines Zielpunktes in der Kartendarstellung umfasst.

3. Verfahren zum Betrieb eines Navigationssystems zur Bestimmung einer Route zu einem Zielpunkt, wobei das Navigationssystem eine Eingabevorrichtung (5) zur alphanumerischen Eingabe des Zielpunktes umfasst, wobei während der Eingabe des Zielpunktes mögliche Zielpunkte in einer Kartendarstellung angezeigt werden, **dadurch gekennzeichnet, dass** bei Eingabe eines weiteren Buchstabens eine veränderte Auswahl möglicher Zielpunkte in einem veränderten Kartenausschnitt angezeigt wird, wobei die Auswahl die wahrscheinlichsten Zielpunkte umfasst, und wobei in eine Abschätzung der Wahrscheinlichkeit die Nähe zum Standort des Navigationssystems und die Größe des Zielortes eingehen.

4. Verfahren nach Anspruch 3, **dadurch gekennzeichnet, dass** die Auswahl nicht mehr als zehn Zielpunkte umfasst.

5. Verfahren nach einem der Ansprüche 3 oder 4, **dadurch gekennzeichnet, dass** eine engere Auswahl der Auswahl möglicher Zielpunkte in der Kartendarstellung hervorgehoben dargestellt wird.

6. Verfahren nach einem der Ansprüche 3 bis 5, **dadurch gekennzeichnet, dass** der wahrscheinlichste Zielpunkt in der Kartendarstellung besonders hervorgehoben dargestellt wird.

7. Verfahren nach einem der Ansprüche 3 bis 6, **dadurch gekennzeichnet, dass** ein Zielpunkt der Auswahl in der Kartendarstellung dargestellter Zielpunkte akustisch ausgewählt wird.

8. Verfahren nach Anspruch 7, **dadurch gekennzeichnet, dass** eine Aufforderung zur erneuten Auswahl ausgegeben wird, wenn die akustische Eingabe keinem Zielpunkt zugeordnet werden konnte.

## Claims

1. Navigation system, particularly for a motor vehicle (1), for determining a route to a destination, wherein the navigation system comprises an input apparatus (5) for the alphanumeric input of the destination and a display (4) for presenting variable information, wherein the navigation system has a computation device (10) for displaying possible destinations in a map presentation by means of the display (4) during the input of the destination, **characterized in that** the computation device (10) is designed to display an altered selection of possible destinations in an altered map detail when a further letter is input, wherein the selection comprises the most probable destinations, and wherein an assessment of the probability uses the proximity to the location of the navigation system and the size of the destination.

2. Navigation system according to Claim 1, 2 or 3, **characterized in that** the navigation system comprises an operator control element (5) for selecting a destination in the map presentation.

3. Method for operating a navigation system for determining a route to a destination, wherein the navigation system comprises an input apparatus (5) for the alphanumeric input of the destination, wherein possible destinations are displayed in a map presentation during the input of the destination, **characterized in that** when a further letter is input, an altered selection of possible destinations is displayed in an altered map detail, wherein the selection comprises the most probable destinations, and wherein an assessment of the probability uses the proximity to the location of the navigation system and the size of the destination.

4. Method according to Claim 3, **characterized in that** the selection comprises no more than ten destinations.

5. Method according to either of Claims 3 and 4, **characterized in that** a narrower selection from the selection of possible destinations is presented in the map presentation in highlighted form.

6. Method according to one of Claims 3 to 5, **characterized in that** the most probable destination is presented in the map presentation in particularly highlighted form.

7. Method according to one of Claims 3 to 6, **characterized in that** a destination from the selection of destinations presented in the map presentation is selected acoustically.

8. Method according to Claim 7, **characterized in that** a request for reselection is output if the acoustic input has not been able to be associated with a destination.

## Revendications

1. Système de navigation, notamment pour un véhicule automobile (1), destiné à déterminer un itinéraire vers un point de destination, le système de navigation comprenant un dispositif de saisie (5) servant à la saisie alphanumérique du point de destination et un écran (4) servant à la représentation d'informations variables, le système de navigation possédant un appareil de calcul (10) servant à afficher les points de destination possibles dans une représentation cartographique au moyen de l'écran (4) pendant la saisie du point de destination, **caractérisé en ce que** l'appareil de calcul (10) est configuré pour l'affichage d'une sélection modifiée des points de destination possibles dans une portion de carte modifiée lors de la saisie d'une lettre supplémentaire, la sélection comprenant les points de destination les plus probables et la proximité par rapport à l'emplacement du système de navigation et la taille du lieu de destination intervenant dans une estimation de la probabilité.

2. Système de navigation selon la revendication 1, 2, ou 3, **caractérisé en ce que** le système de navigation comprend un élément de commande (5) destiné à sélectionner un point de destination dans la représentation cartographique.

3. Procédé pour faire fonctionner un système de navigation en vue de déterminer un itinéraire vers un point de destination, le système de navigation comprenant un dispositif de saisie (5) servant à la saisie alphanumérique du point de destination, les points de destination possibles étant affichés pendant la saisie du point de destination dans une représentation cartographique, **caractérisé en ce que** lors de la saisie d'une lettre supplémentaire, une sélection modifiée des points de destination possibles est affichée dans une portion de carte modifiée, la sélection comprenant les points de destination les plus probables et la proximité par rapport à l'emplacement du système de navigation et la taille du lieu de destination intervenant dans une estimation de la probabilité.

4. Procédé selon la revendication 3, **caractérisé en ce que** la sélection ne comprend pas plus de dix points de destination.

5. Procédé selon l'une des revendications 3 ou 4, **caractérisé en ce qu'**une sélection plus étroite de la sélection des points de destination possibles est représentée avec mise en valeur dans la représentation cartographique.

6. Procédé selon l'une des revendications 3 à 5, **caractérisé en ce que** le point de destination le plus probable est représenté avec une mise en valeur particulière dans la représentation cartographique.

7. Procédé selon l'une des revendications 3 à 6, **caractérisé en ce qu'**un point de destination de la sélection est sélectionné de manière sonore dans la représentation cartographique des points de destination représentés.

8. Procédé selon la revendication 7, **caractérisé en ce qu'**une invitation à une nouvelle sélection est émise lorsque la saisie sonore n'a pu être associée à aucun point de destination.
